# EUROPÄISCHE PATENTSCHRIFT

(11) **EP 2 528 451 B1**
(45) Veröffentlichungstag und Bekanntmachung des Hinweises auf die Patenterteilung: **20.05.2015**
(21) Anmeldenummer: 11701281.5
(22) Anmeldetag: 28.01.2011
(51) Int. Cl.: A23G 4/20, A23G 4/18, A23P 1/12, B29C 45/00

(54) **VERFAHREN ZUR HERSTELLUNG VON KAUGUMMI**
METHOD FOR PRODUCING CHEWING GUM
PROCÉDÉ DE PRODUCTION DE CHEWING-GUM

(30) Priorität: 28.01.2010 AT 1142010
(43) Veröffentlichungstag der Anmeldung: 05.12.2012
(73) Patentinhaber: Meister, Michael, 8700 Leoben (AT)
(72) Erfinder: Meister, Michael, 8700 Leoben (AT)
(74) Vertreter: Haeusler, Rüdiger Hans-Jörg
(86) Internationale Anmeldenummer: PCT/EP2011/051256
(87) Internationale Veröffentlichungsnummer: WO 2011/092307

(56) Entgegenhaltungen:
- WO-A2-2007/101746
- CN-Y- 201 004 978
- GB-A- 2 411 615
- JP-A- 57 163 444
- US-A- 4 882 176

## Beschreibung

Die Erfindung bezieht sich auf die Verwendung einer Spritzgußmaschine zum Herstellen von Kaugummi.

Aus dem Fachgebiet der Kunststoffverarbeitung sind Spritzgußmaschinen bekannt, mit denen Kunststoffgranulat zu fertigen Produkten gespritzt wird. Eine Spritzgußmaschine weist üblicherweise eine Spritzeinheit und eine Schließeinheit auf, in der ein Spritzwerkzeug eingespannt ist. Die Spritzeinheit weist einen durch ein Heizelement beheizten Zylinder (kann auch flüssigkeitsbeheizt sein) auf, dem Kunststoffgranulat zugeführt wird. Das Kunststoffgranulat wird in dem Zylinder gemischt, erwärmt und verdichtet, bis es bei dem Spritzvorgang über eine Düse in das Spritzwerkzeug gespritzt wird. Nach einem kurzen Abkühlvorgang öffnet die Schließeinheit das Spritzwerkzeug und das fertige Produkt kann entnommen werden.

Aus dem Fachgebiet der Lebensmittelherstellung sind Maschinen bekannt, um essbare Kaugummis herzustellen. Bei einem üblichen Herstellungsverfahren für Kaugummis werden die Kaugummi-Bestandteile in einem Behälter geknetet und anschließend einer Strangpressmaschine zugeführt. Die Strangpressmaschine presst die Kaugummimasse als Strang auf ein Förderband, wobei in bestimmten Abständen Einkerbungen vorgesehen werden. Nach einem Trocknungsvorgang wird der Kaugummistrang in einen Trommler eingebracht, in der der Kaugummistrang in kleine Stücke gebrochen wird. Anschließend werden die Kaugummis mit einer Wasser-Süßstoff-Mischung überzogen und die nun fertigen Kaugummi-Dragees verpackt. Zur Erzeugung von Kaugummis in Streifenform wird die Kaugummimasse ausgewalkt und mit Zucker oder Zuckerersatzstoffen gepudert. Anschließend wird die Platte in Streifen geschnitten und verpackt.

Es ist aus US 4,882,176 bzw. aus JP 57 163 444 bekannt, Kaugummis mittels Spritzgießens herzustellen.

Der Erfindung liegt die Aufgabe zugrunde, ein Verfahren zur Herstellung von Kaugummis zu schaffen, bei dem Kaugummis in praktisch beliebiger dreidimensionaler Form hergestellt werden können. Um beispielsweise das Logo einer Firma mit Kaugummi nachbilden zu können, wäre ein Verfahren zur Herstellung mehrfärbiger dreidimensionaler Kaugummis erwünscht.

Diese Aufgabe wird durch den Gegenstand mit den Merkmalen gemäß des unabhängigen Anspruches gelöst. Vorteilhafte Weiterbildungen ergeben sich aus den abhängigen Ansprüchen.

Gemäß einem exemplarischen Ausführungsbeispiel wird eine Spritzgußmaschine zur Herstellung von dreidimensionalen Spritzgußteilen verwendet, wobei einer Spritzeinheit der Spritzgußmaschine granulatförmige und/oder pulverförmige und/oder flüssige Kaugummi-Bestandteile oder fertige Massen zugeführt werden, die durch zumindest ein Heizelement (zum Beispiel ein Flüssigkeits-Heizelement zum Heizen durch eine Flüssigkeit) beheizt in einer Schnecke der Spritzeinheit und/oder mittels eines Kolbens vermischt und über eine Düse bei einem Spritzvorgang an ein Spritzwerkzeug abgegeben werden, um dreidimensional geformte essbare Kaugummis zu spritzen, wobei das Spritzwerkzeug durch zumindest ein Kühlelement gekühlt wird, um gespritzte Kaugummis vor dem Entformen zu kühlen, wobei in einem mehrstufigen Spritzverfahren ein aus mehreren Komponenten (insbesondere aus mehreren unterschiedlichen - zum Beispiel optisch und/oder aufgrund mechanischer Festigkeitseigenschaften unterscheidbarer - thermoplastischer Komponenten, wobei die unterschiedlichen thermoplastischen Komponenten bei dem fertigen Kaugummi vorteilhaft als unterschiedlich wahrnehmbare zusammenhängende Bereiche erhalten bleiben können und somit unterscheidbare, separate und dennoch miteinander verbundene Kaugummibereiche bilden können) bestehender Kaugummi in das Spritzwerkzeug gespritzt wird bzw. in dem Spritzwerkzeug gebildet wird.

Gemäß einem anderen exemplarischen Ausführungsbeispiel ist eine Spritzgußmaschine zur Herstellung von dreidimensionalen Spritzgußteilen geschaffen, wobei eine Spritzeinheit vorgesehen ist, der granulatförmige und/oder pulverförmige und/oder flüssige Kaugummi-Bestandteile oder fertige Massen zuführbar sind, und dass in der Spritzeinheit zumindest ein Heizelement oder eine Flüssigkeitsheizung vorgesehen ist, mit dem die Kaugummi-Bestandteile beheizt werden, und dass eine Schnecke und/oder Kolben in der Spritzeinheit vorgesehen ist, in der oder dem die Kaugummi-Bestandteile vermischt und über eine Düse bei einem Spritzvorgang an ein Spritzwerkzeug abgegeben werden, mit dem dreidimensional geformte essbare Kaugummis spritzbar sind, wobei das Spritzwerkzeug zumindest ein Kühlelement aufweist, mit dem gespritzte Kaugummis vor dem Entformen gekühlt werden, ferner aufweisend eine Einrichtung, die zum Spritzen eines aus mehreren Komponenten bestehenden Kaugummis in das Spritzwerkzeug in einem mehrstufigen Spritzverfahren eingerichtet ist.

Gemäß noch einem anderen exemplarischen Ausführungsbeispiel ist ein Spritzwerkzeug für eine Spritzgußmaschine geschaffen, wobei das Spritzwerkzeug mit einer Spritzgußmaschine mit den oben beschriebenen Merkmalen verwendbar ist und wobei das Spritzwerkzeug zumindest ein Kühlelement aufweist, mit dem gespritzte Werkstücke, insbesondere Kaugummis, vor dem Entformen gekühlt werden.

Gemäß noch einem anderen exemplarischen Ausführungsbeispiel ist eine Anordnung zum Herstellen von Kaugummi bereitgestellt, wobei die Anordnung eine Spritzgußmaschine mit den oben beschriebenen Merkmalen und Kaugummi-Bestandteile aufweist, die der Spritzgußmaschine zuführbar oder zugeführt sind.

Gemäß einem weiteren exemplarischen Ausführungsbeispiel ist ein Verfahren zur Herstellung von dreidimensionalen Spritzgußteilen mittels einer Spritzgußmaschine geschaffen, wobei bei dem Verfahren einer Spritzeinheit der Spritzgußmaschine granulatförmige und/oder pulverförmige und/oder flüssige Kaugummi-Bestandteile oder fertige Massen zugeführt werden, die Kaugummi-Bestandteile durch zumindest ein Heizelement (insbesondere durch eine Flüssigkeit) beheizt in einer Schnecke und/oder mittels eines Kolben der Spritzeinheit vermischt und über eine Düse bei einem Spritzvorgang an ein Spritzwerkzeug abgegeben werden, um dreidimensional geformte essbare Kaugummis zu spritzen, das Spritzwerkzeug durch zumindest ein Kühlelement gekühlt wird, um gespritzte Kaugummis vor dem Entformen zu kühlen, und in einem mehrstufigen Spritzprozess ein aus mehreren unterschiedlichen thermoplastischen Komponenten bestehender Kaugummi in dem Spritzwerkzeug gebildet wird.

Gemäß einem anderen exemplarischen Ausführungsbeispiel ist ein Kaugummi geschaffen, der mit dem Verfahren mit den oben beschriebenen Merkmalen hergestellt ist.

Durch die erfindungsgemäßen Maßnahmen ist der Vorteil erhalten, dass eine aus dem Fachgebiet der Kunststofftechnik bekannte Spritzgußmaschine, nach Durchführung gewisser Anpassungen der Spritzgussmaschine vor allem der Spritzeinheit an den Werkstoff Kaugummi, verwendet werden kann. Hierdurch kann auf jahrzehntelanges Know-How bei Spritzgußmaschinen in der Kunststofftechnik zurückgegriffen werden.

Verglichen mit Kunststoff weist Kaugummi einen gänzlich anderen, nämlich niedrigeren, Temperaturbereich auf, in dem der Werkstoff Kaugummi in einer Schnecke und/oder mittels eines oder mehrerer Kolben verarbeitet und über eine Düse in ein Spritzwerkzeug gespritzt werden kann. Die Spritzgußmaschine muss daher zumindest dahingehend angepasst werden, dass das zumindest ein Heizelement (zum Beispiel ein Widerstandsheizelement oder eine Flüssigkeitsheizung) in der Spritzeinheit an den erforderlichen Temperaturbereich angepasst wird und dass ein Kühlelement in dem Spritzwerkzeug den gespritzten Kaugummi vor dem Entformen kühlt.

Mit der Spritzgußmaschine können Kaugummis erstmals dreidimensional geformt und gegebenenfalls zwei- oder mehrfärbig eingefärbt gespritzt werden. Durch dieses Herstellungsverfahren kann beispielsweise das Logo einer Firma in Form eines Kaugummis hergestellt werden, der dann als Werbegeschenk verteilt werden kann. Es sind aber auch beliebige andere Formen, wie beispielsweise eine Schraube oder ein Kugelschreiber, täuschend echt als Kaugummi herstellbar.

Bei einem mehrstufigen Spritzverfahren kann beispielsweise bei einem ersten Spritzvorgang ein Teil des Spritzwerkzeugs mit einem Kaugummi, der rot ist und nach Erdbeere schmeckt, ausgespritzt werden und bei einem zweiten Spritzvorgang der restliche Teil des Spritzwerkzeugs mit einem anderen Kaugummi, der gelb ist und nach Zitrone schmeckt, ausgespritzt werden. Auf diese Weise könnte beispielsweise das Logo einer Firma in rot-gelb als Kaugummi erzeugt werden.

Es können Mehrkomponenten-Kaugummis hergestellt werden, d.h. Kaugummis aus mindestens zwei Kaugummi-Rohstoffkomponenten. Diese können in mehreren unterschiedlichen Formen in einer Spritzgussmaschine in jeder beliebigen dreidimensionalen Form aufgespritzt werden. Im Weiteren werden zusätzliche Ausgestaltungen der Verwendung beschrieben. Diese gelten auch für die Spritzgußmaschine zur Herstellung von dreidimensionalen Spritzgußteilen, die Anordnung zum Herstellen von Kaugummi, das Verfahren zur Herstellung von dreidimensionalen Spritzgußteilen mittels einer Spritzgußmaschine, und den Kaugummi. Gemäß einem exemplarischen Ausführungsbeispiel kann das zumindest eine Kühlelement das Spritzwerkzeug auf eine Werkzeugtemperatur im Bereich von ungefähr -20 bis ungefähr +20 Grad Celsius, besonders vorteilhaft im Bereich von ungefähr -10 bis ungefähr +10 Grad Celsius, kühlen. Dieser Temperaturbereich hat sich für mittels Spritzguß zu verarbeitende thermoplastische Materialien wie Kaugummi als sehr vorteilhaft herausgestellt, um den Kaugummi zu härten und ihn ohne die Gefahr des Verklebens oder des Verbleibens von Rückständen in der Form aus dem Formwerkzeug entnehmen zu können.

Gemäß einem exemplarischen Ausführungsbeispiel können die Kaugummi-Bestandteile in der Schnecke mit dem zumindest einen Heizelement (beispielsweise eine Flüssigkeitsheizung) auf eine Werkstofftemperatur im Bereich von ungefähr +20 bis ungefähr +120 Grad Celsius beheizt werden. Als besonders vorteilhaft hat sich der Bereich zwischen ungefähr +40 und ungefähr +90 Grad Celsius herausgestellt. Dieser Temperaturbereich, der deutlich niedriger ist als Temperaturbereiche, die zum Verarbeiten von Kunststoff mittels Spritzgießens eingesetzt werden, ist speziell auf den thermoplastischen Werkstoff Kaugummi angepasst, und erlaubt es, den Kaugummi weich und geschmeidig zu machen, um ihn mittels Spritzgießens verarbeiten zu können.

Die Kaugummimasse wird bei dem Spritzgussverfahren zunächst basierend auf Pellets oder einem Granulat oder einer fertigen Masse in die Spritzgussmaschine eingebracht , wo die Masse zunächst erwärmt wird. Hierfür werden Temperaturen eingesetzt, die weit unterhalb jener liegen, die bei Spritzgussverfahren zur Kunststoffverarbeitung (180 Grad Celsius und mehr) eingesetzt werden. Für die Kaugummiverarbeitung kann die Temperatur zum Beispiel bei 40 bis 90 Grad Celsius liegen, um den Kaugummi weich und damit spritzgussverarbeitungsfähig zu machen. Es ist möglich, entlang der Spritzgussschnecke und /oder Kolben zwei oder mehr Temperaturbereiche vorzusehen, zum Beispiel einen ersten Temperaturbereich von 40 Grad Celsius nahe des Einzuges der Pellets und einen höheren Temperaturbereich von zum Beispiel 60 Grad Celsius weiter hinten im Verarbeitungspfad. Nachdem der Kaugummi in das entsprechende Formwerkzeug injiziert worden ist, sollte die Kaugummimasse abgekühlt werden. Dies wird durch eine Kühleinheit ermöglicht, die zum Beispiel den Kaugummi auf -15 Grad Celsius oder -3 Grad Celsius bringt. Dadurch erstarrt die thermoplastische Kaugummimasse.

Gemäß einem exemplarischen Ausführungsbeispiel kann in dem Spritzwerkzeug ein Hohlkörper aus Kaugummi gespritzt werden. Die Rückmeldung von Verbrauchern zeigt, dass Benutzer bei Überschreitung einer gewissen Masse von Kaugummi diesen im Mund als unangenehm empfinden, so dass mittels Bildens von Hohlkörpern auch ausreichend großvolumige Kaugummis gefertigt werden können, die dennoch einem Benutzer ein angenehmes Kaugefühl vermitteln.

Gemäß einem exemplarischen Ausführungsbeispiel kann das Angußsystem des Spritzwerkzeugs beheizt werden. Es ist möglich, das gesamte Angußsystem mit einer konstanten Temperatur zu beheizen. Alternativ kann auch ein Temperaturgradient oder eine sprunghafte Temperaturverteilung an das Angußsystem angelegt werden, um den Spritzgußprozess auf die spezifischen Bedürfnisse des Verarbeitens von Kaugummirohmateriale anzupassen.

Gemäß einem exemplarischen Ausführungsbeispiel kann in dem mehrstufigen Spritzverfahren ein aus mehreren unterschiedlichen thermoplastischen Komponenten bestehender Kaugummi in das Spritzwerkzeug gespritzt werden. Thermoplaste sind Materialien, die sich in einem bestimmten Temperaturbereich thermoplastisch verformen lassen. Dieser Vorgang ist reversibel, das heißt er kann durch Abkühlung und Wiedererwärmung bis in den schmelzflüssigen Zustand beliebig oft wiederholt werden, solange nicht durch Überhitzung eine thermische Versetzung des Materials einsetzt. Darin unterscheiden sich Thermoplaste von Duroplasten und Elastomeren. Thermoplaste sind unter Wärmeeinfluss verformbar, wobei im Rahmen der Erfindung bevorzugt Thermoplaste verwendet werden, die bei Körpertemperatur (37 Grad Celsius) eines Menschen verformbar sind und es bei normaler Zimmertemperatur (20 Grad Celsius) nur zu einem erheblich herabgesetzten Maß sind. Als eine Komponente des Kaugummis kann im Rahmen dieser Patentanmeldung insbesondere eine Mischung aus einer thermoplastischen Kaumasse und Füllstoffen verstanden werden. Es unterscheiden sich unterschiedliche Komponenten des Kaugummis im Sinne dieser Patentanmeldung durch die Zusammensetzung von thermoplastischer Kaumasse und/oder zugeordneten Füllstoffen. Als Kaumasse kann Mastix, Chicle oder ein Kunststoff, zum Beispiel Polyisobutylen verwendet werden. Als Füllstoffe können Aluminiumoxid, Kieselsäure oder Zellulose, Weichmacher, Feuchthaltemittel, Antioxidantien, Aromen, Säuren, Farbstoffe und/oder Emulgatoren verwendet werden.

Gemäß einem exemplarischen Ausführungsbeispiel kann in dem mehrstufigen Spritzverfahren zunächst in einem ersten Formwerkzeug einen Kaugummivorformling aus einer ersten Komponente gebildet werden, nachfolgend der Kaugummivorformling in ein anderes zweites Formwerkzeug überführt werden, und dann in dem zweiten Formwerkzeug ein Hohlraum des Kaugummivorformlings mit der zweiten Komponente gefüllt werden und/oder der Kaugummivorformling mit der zweiten Komponente umspritzt werden. Gemäß diesem bevorzugten Ausführungsbeispiel werden unterschiedliche Formwerkzeuge zum Aufbau eines Kaugummis in einem Spritzgußsystem aus verschiedenen Komponenten verwendet. Ein Kaugummivorformling aus dem ersten Formwerkzeug kann dann in das zweite Formwerkzeug, das eine andere Hohlraumgeometrie als das erste Formwerkzeug aufweist, eingelegt werden, und nachfolgend kann in den Kaugummivorformling und/oder um den Kaugummivorformling herum die andere Komponente ein- und/oder aufgebracht werden.

Gemäß einem exemplarischen Ausführungsbeispiel kann das erste Formwerkzeug zwei Schalenbereiche aufweisen, die miteinander ein erstes Aussparungsvolumen einschließen, und das zweite Formwerkzeug kann zwei Schalenbereiche aufweisen, die miteinander ein zweites Aussparungsvolumen einschließen, das größer oder zumindest anders als das erste Aussparungsvolumen ist. Als Aussparungsvolumen kann der Volumen eines Hohlraums verstanden werden, den die beiden Schalen eines der Formwerkzeuge einschließen, wenn die beiden Schalen aufeinander aufgesetzt sind.

Gemäß einem exemplarischen Ausführungsbeispiel kann das erste Formwerkzeug an mindestens einem der zwei Schalenbereiche eine Profilstruktur aufweisen, die das erste Aussparungsvolumen begrenzt und zu mindestens einer Hohlstruktur in einem Oberflächenbereich des Kaugummivorformlings führt. Als eine solche Profilstruktur können zum Beispiel eine oder mehrere Nasen oder sonst wie geformte Überstände verstanden werden, die sich von einer gewölbten Oberfläche des Formwerkzeugs aus erstrecken und zum Bilden von definierbar geformten Hohlräumen in dem Kaugummivorformling führen. Auf diese Weise kann ein Oberflächenprofil aufgeprägt werden oder eine Art Kanal ins Innere des Kaugummis gelegt werden, der dann in dem zweiten Formwerkzeug mit der zweiten Komponente des Kaugummis gefüllt werden kann.

Gemäß einem exemplarischen Ausführungsbeispiel kann das erste Formwerkzeug einen (oder mehrere) verschiebbaren Dorn aufweisen, der zum Bilden einer Hohlstruktur in dem Kaugummivorformling in das erste Aussparungsvolumen einfahrbar ist. Bei Vorsehen von einem oder mehreren verschiebbaren Dornen kann zum Beispiel nach dem Injizieren der ersten Komponente in das erste Formwerkzeug der Dorn so verschoben werden, dass er in die Kaugummimasse eindringt und einen Hohlraum in dem Kaugummi bildet. Nachfolgend kann der Dorn wieder aus der Kaugummimasse herausgefahren werden und der Kaugummivorformling aus dem entsprechenden Formwerkzeug entnommen und in das andere Formwerkzeug gelegt werden.

Gemäß einem exemplarischen Ausführungsbeispiel können die Profilstruktur und der verschiebbare Dorn so zusammenwirken, dass die mittels der Profilstruktur gebildete Hohlstruktur und die mittels des verschiebbaren Dorns gebildete Hohlstruktur zusammenhängend ausgebildet werden. Gemäß dieser Ausgestaltung kann mittels der Profilstruktur ein erster Hohlraum und mittels des verschiebbaren Dorns ein zweiter Hohlraum gebildet werden, die miteinander in Fluidverbindung gebracht werden können. Anders ausgedrückt können komplexe (zum Beispiel auch hinterschnittene) Hohlräume im Inneren des Kaugummis generiert werden. Dies ermöglicht es für den nachfolgenden Schritt des Hinzufügens der zweiten Komponente des Kaugummis, dass mehrere Injektionslöcher zur Verfügung stehen, um die teilweise zähe Kaugummimasse ins Innere des Kaugummivorformlings einzubringen. Dies führt zu mechanisch besser zusammenhängenden Kaugummis und zum Vermeiden unerwünschter Hohlräume im Inneren des Kaugummis.

Gemäß einem exemplarischen Ausführungsbeispiel können bei Einbringen des Kaugummivorformlings in das zweite Formwerkzeug die zusammenhängenden Hohlstrukturen mit der zweiten Komponente ausgefüllt werden. Durch Füllen der zusammenhängenden Hohlraumstruktur kann ferner der Zusammenhalt zwischen den beiden unterschiedlichen Komponenten des Kaugummis gefördert werden.

Gemäß einem exemplarischen Ausführungsbeispiel kann bei Einbringen des Kaugummivorformlings in das zweite Formwerkzeug der Kaugummivorformling mit der zweiten Komponente überspritzt werden. Die zweite Komponente kann somit ganz oder teilweise die erste Komponente überdecken und kann ganz oder teilweise in die erste Komponente eindringen.

Gemäß einem exemplarischen Ausführungsbeispiel kann ein Schalenbereich des ersten Formwerkzeugs und ein Schalenbereich des zweiten Formwerkzeugs in einem gemeinsamen ersten Werkzeugkörper und der andere Schalenbereich des ersten Formwerkzeugs und der andere Schalenbereich des zweiten Formwerkzeugs in einem gemeinsamen zweiten Werkzeugkörper gebildet sein. Zum Beispiel kann, während die beiden Werkzeugkörper aufeinander aufliegen und die somit jeweils zwei Schalenbereiche übereinander liegen, in einem der Schalenpaare die erste Komponente injiziert werden und gleichzeitig in dem anderen Schalenpaar ein zuvor gebildeter Kaugummivorformling mit der zweiten Komponente versehen werden. Nachfolgend kann aus dem anderen Schalenpaar der fertige Kaugummi entnommen werden und der aus der ersten Komponente gebildete Kaugummivorformling zum Beispiel mittels eines Roboters von dem ersten Schalenpaar in das andere Schalenpaar überführt werden. Dann kann dieselbe Prozedur wiederholt werden, so dass ein kontinuierlicher Herstellungsprozess erhalten wird.

Gemäß einem exemplarischen Ausführungsbeispiel kann in dem mehrstufigen Spritzverfahren die aus dem zweiten Formwerkzeug erhaltene Kaugummistruktur in mindestens einem dritten Formwerkzeug mit mindestens einer dritten Komponente gefüllt und/oder umspritzt werden. Somit kann auch noch eine dritte, vierte oder eine beliebige Anzahl weiterer Komponenten zu dem Kaugummi hinzugefügt werden, so das komplexe Strukturen aufgebaut werden können. Die dritte Komponente kann wiederum ein thermoplastisches Kaumaterial aufweisen und/oder ein anderes Material wie zum Beispiel ein metallischer Überzug aus einer dünnen Metallschicht.

Gemäß einem alternativen exemplarischen Ausführungsbeispiel kann in dem mehrstufigen Spritzverfahren zunächst in einem Formwerkzeug ein Kaugummivorformling aus einer ersten Komponente gebildet werden, in einem optionalen Schritt mittels einer Profilstruktur und/oder eines verschiebbaren Dorns des Formwerkzeugs in dem Kaugummivorformling eine Hohlstruktur gebildet werden, und in demselben Formwerkzeug der Kaugummivorformling mit der zweiten Komponente umspritzt werden und/oder die optional gebildete Hohlstruktur des Kaugummivorformlings mit der zweiten Komponente gefüllt werden. Somit ist es auch möglich, mittels eines einzigen Formwerkzeugs mehrkomponentige Kaugummis zu bilden, indem erst nach dem jeweiligen Verfestigen einer zuvor gebildeten Komponente eine nachfolgend hinzuzufügende Komponente zugeführt wird.

Gemäß einem exemplarischen Ausführungsbeispiel kann mittels des Heizelements (insbesondere einer Flüssigkeitsheizung) ein ortsabhängig zunehmendes Heiztemperaturprofil in einem Raumbereich zwischen dem Zuführen der Kaugummi-Bestandteile zu der Spritzgußmaschine und der Düse eingestellt werden. Während des Verarbeitens der Kaugummirohmasse wird das Kaugummirohmaterial zum Beispiel in Form von Pellets oder einem Granulat oder fertiger Massen in einen Zuführbereich der Spritzgußmaschine eingebracht. Dann durchläuft der Kaugummi eine Schnecke und/oder Kolben und wird nachfolgend in eine Düse überführt, von wo aus das Kaugummirohmaterial in die Formwerkzeuge überführt wird. Gerade in der Schnecke ist zwischen drei Zonen zu unterscheiden, nämlich einem Einlassbereich hoher Ganghöhe, einem Verdichtungsbereich und einem Ausstoßbereich. Gemäß einem bevorzugten Ausführungsbeispiel kann eine ortsabhängige Temperaturverteilung entlang der Zone der Schnecke eingestellt werden, so dass das aufgeprägte Temperaturprofil am Ende der Schnecke höher ist als am Anfang der Schnecke. Dies führt zu besonders günstigen Verarbeitungseigenschaften des Kaugummirohmaterials.

Gemäß einem exemplarischen Ausführungsbeispiel kann das Heiztemperaturprofil am Ort des Zuführens der Kaugummi-Bestandteile zwischen ungefähr 5 Grad Celsius und ungefähr 45 Grad Celsius und am Ort der Düse zwischen ungefähr 55 Grad Celsius und ungefähr 90 Grad Celsius betragen. Zum Beispiel kann im Einlassbereich die Temperatur ungefähr 40 Grad Celsius, im Verdichtungsbereich ungefähr 50 Grad Celsius und im Ausstoßbereich ungefähr 60 bis 90 Grad Celsius betragen.

Gemäß einem exemplarischen Ausführungsbeispiel kann das Spritzwerkzeug mit einer oben beschriebenen Spritzgußmaschine verwendbar sein und das Spritzwerkzeug zumindest ein Kühlelement aufweisen, mit dem gespritzte Werkstücke, insbesondere Kaugummis, vor dem Entformen gekühlt werden. Das Kühlelement kann zum Beispiel als Flüssigkeitskühlung realisiert werden, so dass in diesem Bereich Kanäle mit einer gekühlten Kühlflüssigkeit durchströmt werden. In ähnlicher Weise kann das Heizelement mittels Kanälen realisiert werden, die von einer erhitzten Flüssigkeit durchströmt werden.

Es kann in der Maschine sowohl zum Erhitzen als auch zum Abkühlen eine Flüssigkeitstemperiereinheit vorgesehen sein. Zum Heizen wird zum Beispiel Wasser entsprechend geheizt, zum Kühlen kann zum Beispiel Frostschutzmittel entsprechend gekühlt durch den entsprechenden Teil der Apparatur hindurchgeführt werden. Es sind jedoch auch elektrische Heizverfahren (zum Beispiel ohmsche Heizung) oder Kühlverfahren (zum Beispiel Peltierkühlung) möglich, da damit ein gewünschtes ortsabhängiges Temperaturprofil in die Spritzgussmaschine zur Kaugummiverarbeitung eingeprägt werden kann.

Als besonders vorteilhaft hat sich erwiesen, ein in der Kunststofftechnik bekanntes, insbesondere bei der Autoherstellung verwendetes Gasinjektionsverfahren zur Herstellung von hohlen Kaugummis anzuwenden. Bei diesem Gasinjektionsverfahren wird ein Hohlkörper erzeugt, indem die innen liegende noch zähflüssige Kaugummimasse durch eine Gasinjektion ausgeblasen wird bevor sie hart wird. In der Autoindustrie können so beispielsweise hohle Türgriffe aus Kunststoff erzeugt werden. Es werden hohle Kaugummis erzeugt, um eine relativ große dreidimensionale Form zu spritzen ohne dafür unverhältnismäßig viel Kaugummimasse zu benötigen. Das Gasinjektionsverfahren beruht darauf, in ein Formwerkzeug, das teilweise mit Kaugummirohmasse gefüllt ist, einen Gasstoß zu injizieren, der den Kaugummi im Bereich des Gasstoßes lokal verdrängt und somit einen Hohlraum in dem Kaugummi bildet. Überraschenderweise kann dieses Gasinjektionsverfahren auch auf den thermoplastischen Werkstoff Kaugummi angewendet werden, insbesondere wenn dieser auf die genannten geeigneten Temperaturen zwischen +35 und +65 Grad Celsius gebracht sind.

Gemäß einem exemplarischen Ausführungsbeispiel kann mittels eines Flüssigkeitsinjektionsverfahrens ein mit einer Flüssigkeit gefüllter Kaugummi oder ein ungefüllter hohler Kaugummi gespritzt werden. Bei dem Flüssiginjektionsverfahren kann vorteilhafter Weise eine Flüssigkeit unter Druck in ein Formwerkzeug injiziert werden, das bereits zum Teil mit Kaugummirohmasse gefüllt ist. Dadurch kann Kaugummimaterial lokal verdrängt werden und mit der Flüssigkeit ein Hohlraum geschaffen werden. Wird die Flüssigkeit anschließend abgesaugt, so verbleibt ein hohler Kaugummi. Es ist aber auch möglich, die Flüssigkeit in dem Kaugummi zu belassen, so dass dann ein flüssigkeitsgefüllter Kaugummi zurückbleibt. Das Injizieren von Flüssigkeit in einen Kaugummi zum Bilden von Hohlräumen oder flüssigkeitsgefüllten Kavitäten hat den weiteren Vorteil, dass Flüssigkeiten häufig eine hohe Wärmekapazität haben, so dass die Flüssigkeiten bei Injektion mit einer entsprechend niedrigen Temperatur zur zügigen und lokalen Kühlung des Kaugummis beitragen. Dadurch kann mittels Anwendens des Flüssiginjektionsverfahrens auf Kaugummimaterial ebenfalls gefördert werden, dass unerwünschtes ein Verkleben oder das Zurückbleiben von Rückständen in einem Formwerkzeug bei Entnehmen des fertigen Kaugummis aus dem Spritzgußwerkzeug auftritt. Somit ist es sehr vorteilhaft, mittels eines Flüssigkeitsinjektionsverfahrens nicht Gas, sondern eine Flüssigkeit in den Kaugummi einzubringen. Hierbei können beliebige Geschmacksstoffe oder Alkoholika in den Kaugummi gespritzt werden.

Im Folgenden werden exemplarische Ausführungsbeispiele der vorliegenden Erfindung mit Verweis auf die folgenden Figuren detailliert beschrieben.
Figur 1 zeigt eine Spritzgußmaschine gemäß einem exemplarischen Ausführungsbeispiel zur Herstellung von Kaugummi.
Figur 2 zeigt das Spritzwerkzeug der Spritzgußmaschine gemäß Figur 1.
Figur 3 und Figur 4 zeigen schematisch, wie mittels eines entsprechenden Werkzeugs mehrkomponentige Kaugummis hergestellt werden können.
Figur 5 zeigt ein Werkzeug als Teil einer Spritzgußmaschine, mit dem mit unterschiedlichen Formwerkzeugen mehrkomponentige Kaugummis gemäß einem exemplarischen Ausführungsbeispiel hergestellt werden können.
Figur 6 zeigt eine Kaugummivorform, die in einem ersten Formwerkzeug mittels einer Profilstruktur und eines verschiebbaren Dorns hergestellt worden ist.
Figur 7 zeigt einen Kaugummi gemäß einem exemplarischen Ausführungsbeispiel der basierend auf dem Kaugummivorformling von Figur 6 durch Überspritzen und Einspritzen einer zweiten Kaugummikomponente mittels Spritzgießens hergestellt worden ist.
Figur 8 zeigt eine Spritzgußmaschine gemäß einem exemplarischen Ausführungsbeispiel zur Herstellung von mehrkomponentigen Kaugummi.
Figur 9 zeigt einen Abschnitt eines Werkzeugs, das gemäß einem exemplarischen Ausführungsbeispiel zur Herstellung von mehrkomponentigen Kaugummi eingesetzt werden kann.

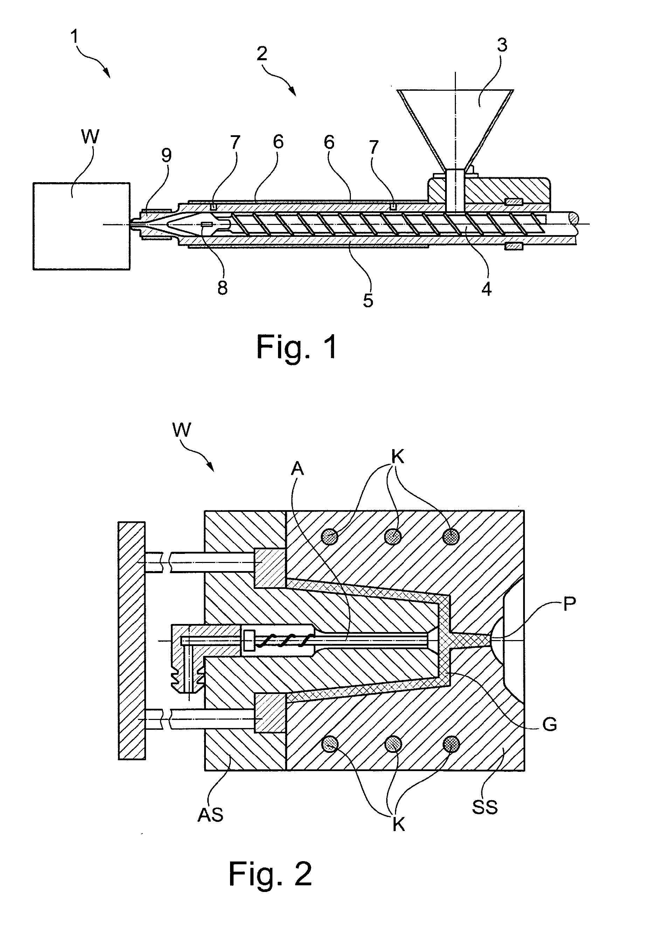

Figur 1 zeigt eine Spritzgußmaschine 1 zur Herstellung von Kaugummis. Die Spritzgußmaschine 1 weist eine Spritzeinheit 2 auf, die durch einen Trichter 3, eine Schnecke 4, einen Zylinder 5, Heizelemente 6, Thermoelemente 7, eine Rückstromsperre 8 und eine Düse 9 gebildet ist.

Bei der Herstellung der Kaugummis werden die Kaugummi-Bestandteile in den Trichter 3 eingefüllt und der Schnecke 4 zugeführt. Meist werden sowohl feste (Granulat oder Pulver) als auch flüssige Kaugummi-Bestandteile verwendet, die in der Schnecke 4 durch Rotation gemischt werden. Zum Spritzen von Kaugummi ist eine Werkstofftemperatur von mehr als 20 Grad Celsius, meist aber zumindest 60 Grad Celsius und mehr, vorteilhaft, wobei dies abhängig von den jeweiligen KaugummiBestandteilen und der zu spritzenden Form des Kaugummis variieren kann. Die Kaugummi-Bestandteile sollten aber auf nicht mehr als 120 Grad Celsius aufgeheizt werden, weshalb sich ein Werkstofftemperaturbereich von 20 bis 120 Grad Celsius als vorteilhaft und ein Werkstofftemperaturbereich bei etwa 40 bis 90 Grad Celsius als besonders vorteilhaft erwiesen hat, insbesondere ein Werkstofftemperaturbereich bei etwa 60 bis 90 Grad Celsius. Thermoelemente 7 messen über die Länge des Zylinders 5 die jeweilige Zylindertemperatur und Heizdrähte der Heizelemente 6 heizen den Zylinder 5 auf, um die jeweils nötige Werkstofftemperatur zu erreichen. Eine in der Figur nicht gezeigte Steuereinheit ist zum Steuern der Heizelemente 6 basierend auf einem Messergebnis der Thermoelemente 7 derart eingerichtet, dass die Werkstofftemperatur des Kaugummirohmaterials an der Düse 9 auf im Bereich zwischen 60 bis 90 Grad Celsius gebracht wird (Solltemperatur einstellbar durch Benutzer oder automatisch vorgebbar).

Die in der Schnecke 4 vermischten und beheizten Kaugummi-Bestandteile werden als Kaugummimasse in ein Spritzwerkzeug W der Spritzgußmaschine 1 eingespritzt, wodurch dem Kaugummi seine dreidimensionale Form gegeben wird. Hierfür wird die Schnecke 4 in dem Zylinder 5 in Richtung der Düse 9 geschoben. Die Rückstromsperre 8 ermöglicht hierbei den Aufbau des zum Einspritzen des Kaugummis in das Spritzwerkzeug W nötigen Drucks.

In Figur 2 ist ein in der Figur 1 nur schematisch dargestelltes Spritzwerkzeug W detaillierter dargestellt. An der Position P wird die Düse 9 der Spritzeinheit 2 während des Spritzvorganges angepresst, um den zähflüssigen Kaugummi in das Spritzwerkzeug W zu pressen. Das Spritzwerkzeug W weist nunmehr ein Kühlelement K auf, das das Spritzwerkzeug W auf eine bestimmte Werkzeugtemperatur herunterkühlt. Hierdurch ist der Vorteil erhalten, dass der in das Spritzwerkzeug W gespritzte Kaugummi G rasch abkühlt und sich gut aus dem Spritzwerkzeug W ausstoßen lässt. Somit wird einerseits die Zykluszeit verkürzt und andererseits ein Ankleben des Kaugummis an dem Spritzwerkzeug W beim Entformen verhindert. Eine Ausstoßeinheit A stößt den Kaugummi G aus dem Spritzwerkzeug W aus, nachdem die Spritzseite SS und die Ausstoßseite AS des Spritzwerkzeugs W voneinander getrennt wurden. Dem Fachmann sind eine Vielzahl möglicher Ausführungsformen von Kühlelementen, wie beispielsweise durch Kühlflüssigkeit oder ein Peltier-Element, bekannt.

Es ist sowohl die Form als auch die Farbe von Kaugummis praktisch beliebig wählbar, wodurch sich ein vollkommen neuer Marktbereich für Kaugummis ergibt.

Zum Beispiel kann ein Kaugummi sowohl Form als auch Farbe einer Schraube aufweisen. Eine Firma, die Schrauben herstellt, könnte diesen Kaugummi an Geschäftskunden als Werbegeschenk verteilen.

Es ist zum Beispiel das Herstellen eines Kaugummis in Drageeform mit einem aus der Kunststoffherstellung bekannten und für die Kaugummiherstellung adaptierten Flüssigkeitsinjektionsverfahren möglich. In das Spritzwerkzeug kann hierfür einerseits Kaugummimasse mit einer Schnecke eingespritzt und andererseits mit einer Injektionsdüse in der Mitte des Kaugummis ein mit Geschmacksstoffen versetztes Gelee eingebracht werden. Hierdurch ist eine Vielzahl an Möglichkeiten gegeben, Kaugummis herzustellen.

Weiters ist es vorteilhaft, mit dem aus der Kunststoffherstellung bekannten Gasinjektionsverfahren, adaptiert für die Kaugummiherstellung, hohle Kaugummis herzustellen. Hierbei wird die in dem Spritzwerkzeug im Inneren des Kaugummis noch ganz weiche Kaugummimasse durch eine Gasinjektion mit hohem Druck ausgeblasen. Mit diesem Verfahren können relativ große Kaugummis hergestellt werden, die im Mund zerkaut ein zum Kauen angenehm geringes Volumen der Kaugummimasse aufweisen. Ein weiterer Vorteil ist, dass der Kaugummihersteller weniger Kaugummimasse für die Herstellung solcher hohler Kaugummis benötigt.

Durch ein mehrstufiges Spritzverfahren können praktisch beliebige Formen von mehrfärbigen und geschmacklich unterschiedlichen Kaugummis hergestellt werden. Diese sind sowohl optisch als auch geschmacklich ansprechend.

Bei dem Spritzwerkzeug wird die Kaugummimasse von der Düse der Spritzeinheit über ein Angußsystem an die Spritzform abgegeben. Um zu verhindern, dass die Werkstofftemperatur der Kaugummimasse beim Spritzvorgang in dem Angußsystem bereits abgekühlt wird, kann es vorteilhaft sein, das Angußsystem des Spritzwerkzeugs auf eine bestimmte Temperatur zu temperieren. Hierdurch ist gewährleistet, dass die Kaugummimasse alle gegebenenfalls auch feine Strukturen des Spritzwerkzeugs zuverlässig ausfüllt und erst in dem Spritzwerkzeug nach erfolgtem Spritzvorgang abkühlt. Insbesondere wird hierdurch eine praktisch abfallfreie Fertigung ohne Angüsse erreicht.

Es kann erwähnt werden, dass es vorteilhaft sein kann Scher- und Mischteile auf der Schnecke anzubringen, um eine bessere Durchmischung der Kaugummi-Bestandteile zu erzielen. Weiters kann vorteilhaft vorgesehen sein, statische Mischer in der Düse einzubringen. Diese können durch Umleitbleche gebildet sein, mit denen ebenfalls die Durchmischung der Kaugummi-Bestandteile gefördert wird. Weiters könnte ein vorgeschalteter Mischer vorgesehen sein, mit dem die Kaugummi-Bestandteile bereits gemischt werden, bevor sie in den Trichter der Spritzgußmaschine eingefüllt werden.

Es kann erwähnt werden, dass weitere Anpassungen von in der Kunststofftechnik verwendeten Spritzgußmaschinen nötig sein können. So kann es sein, dass die Schnecken- und Rückstromsperrengeometrie auf Grund der niedrigen Werkstoff- und Werkzeugtemperatur anders festgelegt werden müssen. In den Angußsystemen können Elemente zur Reduktion des Drucks vorgesehen sein, der beim Spritzen von Kaugummimasse sehr hoch ist. Weiters können Anpassungen im Hinblick auf die Verarbeitung von Lebensmitteln in einer Spritzgußmaschine nötig sein. Veränderte Kaugummi-Bestandteile können zur besseren Verarbeitung in der Spritzgußmaschine beitragen.

Es kann erwähnt werden, dass der Spritzgußmaschine auch fertige Kaugummi-Mischungen (zum Beispiel in Form eines Granulats) zugeführt werden können. In so einem Fall würde die Mischung der Kaugummi-Bestandteile in der Spritzgußmaschine entfallen. Dies ist jedoch unabhängig von den beschriebenen Maßnahmen.

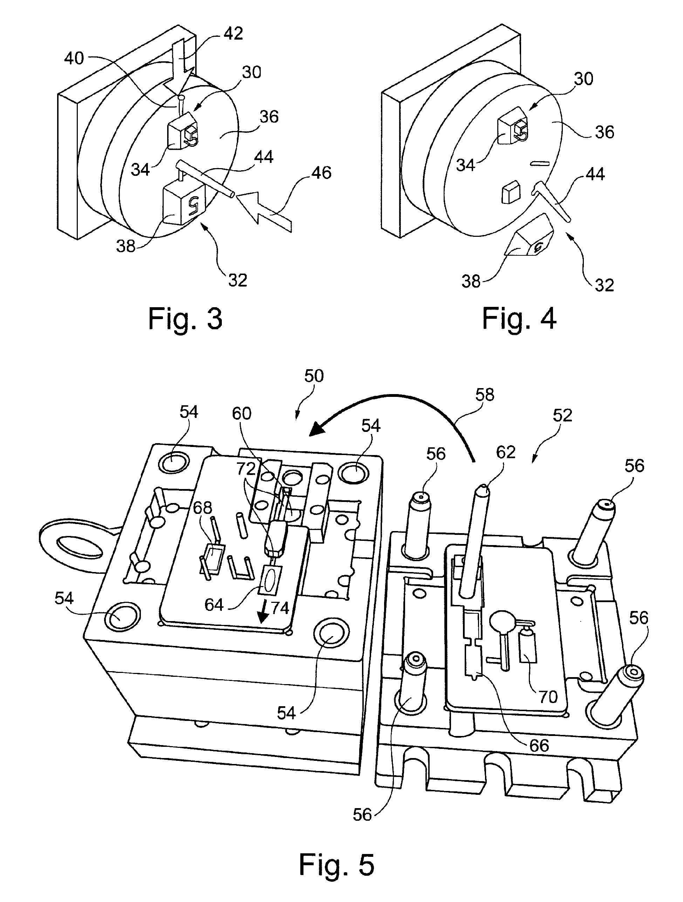

Figur 3 zeigt schematisch einen Teil einer Spritzgußmaschine zum Herstellen von Kaugummi, in der mehrkomponentige Kaugummis hergestellt werden. Figur 3 zeigt eine erste Kavität (erste Komponente)30 und eine zweite Kavität (zweite Komponente) 32. In der Abbildung ist die zweite Formhälfte aus Sichtbarkeitsgründen nicht dargestellt. Die zweite Formhälfte bildet mit der ersten Kavität 30 das Aussparungsvolumen (in der Abbildung bereits mit Element 34 ausgefüllt - Kaugummi). Ferner begrenzt die zweite Kavität 32 mit der zweiten Formhälfte (nicht sichtbar) das zweite Aussparungsvolumen (in der Abbildung bereits mit Element 38 ausgefüllt - zweikomponentiger Kaugummi), welches größer als der erste ist. Trennfläche der beiden Formhälften ist die Fläche 36. Durch einen ersten Angußkanal 40 kann eine erste thermoplastische Kaugummi-Komponente in das erste Aussparungsvolumen injiziert werden, wie mit einem Pfeil 42 angedeutet ist. Durch einen zweiten Angußkanal 44 der zweiten Kavität 32 kann eine zweite thermoplastische Kaugummi-Komponente in das zweite Aussparungsvolumen eingespritzt werden, wie mit einem Pfeil 46 gezeigt ist.

Figur 4 zeigt anhand des Beispiels das geöffnete Werkzeug aus Figur 3. Der zweikomponentige Kaugummi , 38 wird mit der erkalteten Angußstange 44 ausgestoßen., Aus der ersten Kavität 30 wird nur die Angußstange der ersten Komponente ausgestoßen (Bauteil oberhalb von Element 44). Die sichtbare auswerferseitige Formhälfte wird um 180° gedreht und das Werkzeug wird wieder geschlossen. Der Vorgang beginnt von vorne. Die erste Kavität 30 ist jetzt leer und wird ausgespritzt - die zweite Kavität 32 ist mit dem Spritzling aus der ersten Kavität 30 besetzt und wird überspritzt.

dieser Prozess wird nochmals kurz zusammenfassend beschrieben: Bei Produktionsstart sind beide Kavitäten 30, 32 leer. Das Werkzeug wird geschlossen. Danach wird nur die erste Komponente eingespritzt. Der daraus resultierende Vorspritzling soll dann abkühlen. Das Werkzeug wird geöffnet und die Angußstange der ersten Kavität 30 ausgestoßen. Die auswerferseitige Formhälfte dreht sich um 180° (Vorspritzling ist nun im Werkzeug unten). Das Werkzeug schließt sich wieder. Nun kann in der zweiten Kavität 32 der Vorspritzling mit der zweiten Komponente überspritzt werden. Gleichzeitig wird jedoch auch in der ersten Kavität 30 wieder ein Vorspritzling hergestellt. Nach dem Abkühlvorgang wird das Werkzeug geöffnet. Der Zweikomponentenbauteil kann aus der zweiten Kavität 32 mit der Angußstange ausgestoßen werden. In der ersten Kavität 30 wird wieder nur die Angußstange ausgestoßen. Die Werkzeughälfte dreht sich wieder um 180° und der Vorspritzling befindet sich im Werkzeug unten. Der Vorgang beginnt von vorne. Auf diese Weise kann kontinuierlich und mit hoher Kapazität mehrkomponentiger Kaugummi hergestellt werden.

Figur 5 zeigt ein Werkzeug einer Spritzgußmaschine, das zum Ausbilden mehrkomponentiger Kaugummis gemäß einem exemplarischen Ausführungsbeispiel der Erfindung verwendet werden kann.

Es sind ein erster Werkzeugkörper (Auswerferseite) 50 und ein zweiter Werkzeugkörper (Düsenseite) 52 vorgesehen, die miteinander zusammenwirken können. Zum Zusammenwirken der beiden Werkzeugkörper 50, 52 weist der erste Werkzeugkörper 50 vier Sacklöcher 54 auf, die zum Ineingriffnehmen von korrespondierenden Bolzen 56 des zweiten Werkzeugkörpers 52 eingerichtet sind. Anders ausgedrückt muss der zweite Werkzeugkörper 52 entsprechend einer Pfeilrichtung 58 umgedreht und auf den ersten Werkzeugkörper 50 aufgesetzt werden, so dass Aussparungsvolumina zum Aufnehmen von Kaugummi-Material gebildet werden können. Somit wird das korrekte Aufsetzen der Werkzeughälfte erreicht. Um während des Produktionsprozesses einen Hohlraum im Kaugummi zu schaffen, wird mittels eines Bolzens 62, der in eine Bohrung (oberhalb in Nut 60) eingreift, ein Schieber mit einem Dorn 72 verschoben. Beim Schließen des Werkzeuges nach innen - beim Auffahren des Werkzeuges nach außen (außerhalb des Bauteils).

Eine erste Kavität wird gebildet aus einem ersten Hohlraum 64, der einen ersten Schalenbereich des ersten Werkzeugkörpers 50 bildet, und aus einem zweiten Hohlraum 66, der einen ersten Schalenbereich des zweiten Werkzeugkörpers 52 bildet. Wenn der zweite Werkzeugkörper 52 auf den ersten Werkzeugkörper 50 aufgesetzt ist, bildet der erste Hohlraum 64 mit dem zweiten Hohlraum 66 des zweiten Werkzeugkörpers 52 das erste Aussparungsvolumen. In entsprechender Weise bildet ein dritter Hohlraum 68 einen zweiten Schalenbereich des ersten Werkzeugkörpers 52. Korrespondierend bildet eine vierter Hohlraum 70 einen zweiten Schalenbereich des zweiten Werkzeugkörpers 52. Ist der Werkzeugkörper 52 auf den Werkzeugkörper 50 aufgesetzt, so schließen der dritte Hohlraum 68 und der vierte Hohlraum 70 gemeinsam ein zweites Aussparungsvolumen ein, das größer als das von den Hohlräumen 64, 66 eingeschlossene erste Aussparungsvolumen ist.

Um einen Kaugummi herzustellen, wird zunächst im auf den Werkzeugkörper 50 aufgesetzten Zustand des Werkzeugkörpers 52 das erste Aussparungsvolumen mit einem ersten Kaugummirohmaterial (zum Beispiel einer blauen Kaugummimasse mit Blaubeergeschmack) aufgefüllt, um einen Kaugummivorformling zu bilden. In diesem Zusammenhang ist anzumerken, dass die Hohlräume 64 und 66 jeweils drei kleine Nasen aufweisen, die in dem Kaugummivorformling erste Löcher bilden. Ferner ist der verschiebbare Dorn 72 des ersten Werkzeugkörpers 50 derart konfiguriert, dass er mittels Verschiebens in einer Pfeilrichtung 74 in das erste Aussparungsvolumen eindringen kann, um in dem Kaugummivorformling eine Längsaussparung zu bilden.

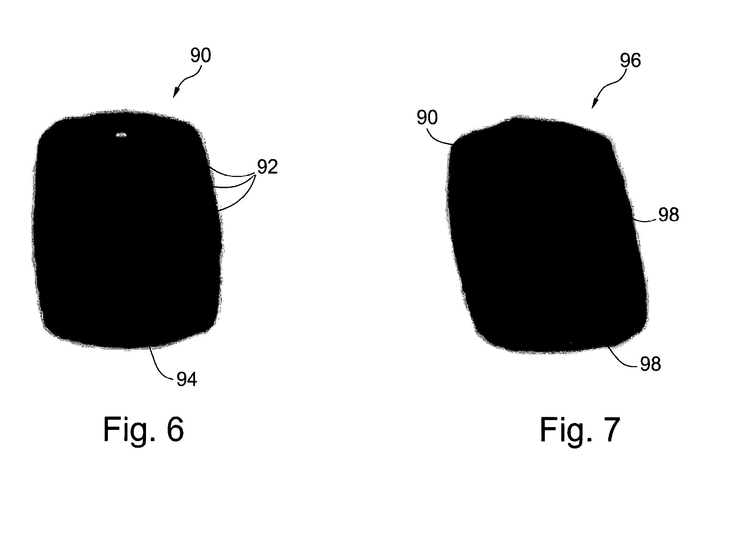

Das Ergebnis dieses Prozesses ist in Figur 6 als Kaugummivorformling 90 zu erkennen. Der Kaugummivorformling 90 aus dem ersten Kaugummirohmaterial mit Blaubeergeschmack enthält drei von den kleinen ortsfesten Nasen in dem ersten Hohlraum 64 erzeugte Vertikallöcher 92, die ins Innere des Kaugummivorformlings 90 eindringen. Ferner enthält der Kaugummivorformling 90 eine Längsaussparung 94, die durch den verfahrbaren Dorn 72 erzeugt wird. Obwohl dies in Figur 6 nicht gezeigt ist, sind die Hohlräume 92 und 94 in Fluidverbindung miteinander, so dass sie quasi einen gemeinsamen verzweigten Hohlraum bilden.

Das erste Kaugummirohmaterial wird in das erste Aussparungsvolumen mit einer Temperatur von zum Beispiel 60 Grad Celsius eingebracht, da bei dieser Temperatur das erste Kaugummirohmaterial fließfähig ist und somit auch die Hohlräume 92, 94 einfach gebildet werden können. Um nachfolgend den Kaugummivorformling 90 aus dem ersten Aussparungsvolumen entnehmen zu können, ohne dass Rückstände darin verbleiben oder der Kaugummi daran kleben bleibt, wird das erste Kaugummirohmaterial und somit der Kaugummivorformling 90 in dem ersten Aussparungsvolumen gekühlt, und zwar auf eine Temperatur von zum Beispiel -3 Grad Celsius. Es hat sich gezeigt, dass bei dieser Temperatur der Kaugummivorformling 90 komfortabel aus dem ersten Aussparungsvolumen entnommen werden kann, ohne dass Rückstände zurückbleiben oder der Kaugummi dort anklebt.

Anschließend wird, zum Beispiel durch einen Roboter, der Kaugummivorformling 90 nach Trennen der beiden Werkzeugkörper 50, 52 aus dem ersten Aussparungsvolumen entnommen und in das zweite Aussparungsvolumen eingelegt. Nachfolgend werden die beiden Werkzeugkörper 50, 52 wieder aneinander montiert, so dass der Kaugummivorformling in dem zweiten Aussparungsvolumen mit einem zweiten thermoplastischen Kaugummirohmaterial zum Bilden eines dreidimensionalen Oberflächenprofils umspritzt werden kann und die gebildeten Hohlräume 92, 94 mit dem zweiten thermoplastischen Kaugummirohmaterial gefüllt werden können. Das zweite thermoplastische Kaugummirohmaterial kann zum Beispiel eine gelbe Kaugummikomponente mit Zitronengeschmack sein.

Figur 7 zeigt das Ergebnis des Einspritzens des zweiten thermoplastischen Kaugummirohmaterials in die Hohlräume 92, 94 und des Umspritzens des Kaugummivorformlings 90 mit dem zweiten thermoplastischen Kaugummirohmaterial. Folglich ist in Figur 7 ein fertig hergestellter Kaugummi 96 zu sehen, bei dem der Kaugummivorformling 90 entlang eines Teils seiner Oberfläche mit der gelben zweiten Kaugummi-Komponente 98 überzogen ist. Ferner sind auch die Hohlräume 92 (nicht gezeigt in Figur 7) und 94 mit der zweiten Kaugummi-Komponente versehen. Indem die Hohlräume 92, 94 ein kommunizierendes System bilden, ist ein einfaches Ein- und Überspritzen des Kaugummivorformlings 90 ermöglicht, so dass auch die beiden unterschiedlichen Kaugummi-Komponenten gut aneinander haften.

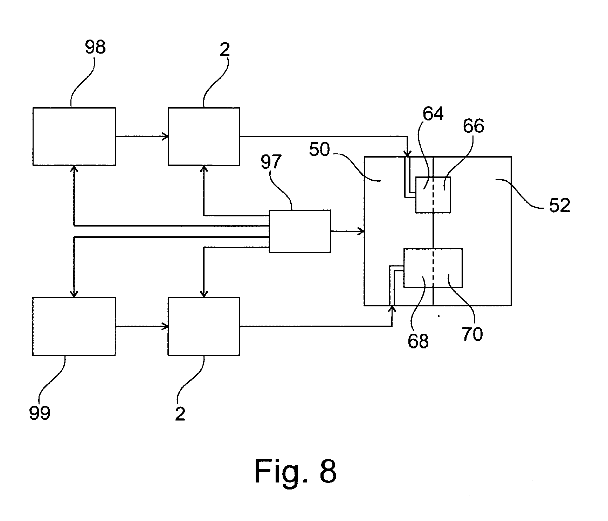

Alternativ zu der Ausgestaltung gemäß Figur 5 ist es natürlich möglich, dass die beiden Werkzeugkörper 50, 52 nicht voneinander demontiert werden müssen, um den Kaugummivorformling von dem ersten Aussparungsvolumen in das zweite Aussparungsvolumen zu befördern. Dies kann auch mittels entsprechender mechanischer Einrichtungen im Inneren des Werkzeuges erfolgen. Ferner ist es nicht notwendigerweise erforderlich, den Kaugummivorformling vor dem Über- oder Einspritzen in ein anderes Aussparungsvolumen zu befördern. Es ist auch möglich, in ein und denselben Aussparungsvolumen zuerst die erste Kaugummi-Komponente und dann die zweite Kaugummi-Komponente aufzubringen. Figur 8 zeigt schematisch eine Spritzgußmaschine gemäß einem exemplarischen Ausführungsbeispiel zur Herstellung von mehrkomponentigen Kaugummi.

Die Spritzgußmaschine aus Figur 8 hat zwei separate Spritzeinheiten 2, von denen jede ausgestaltet sein kann wie in Figur 1 gezeigt. Jeder Spritzeinheit 2 ist aus einem Kaugummirohmaterial-Reservoir 98 bzw. 99 eine jeweilige thermoplastische Kaugummi Komponente zuführbar. Eine Steuereinheit 97 (z.B. ein Mikroprozessor oder eine CPU) steuert die Spritzeinheiten 2 sowie die Kaugummirohmaterial-Reservoirs 98 bzw. 99 (zum Beispiel hinsichtlich des Timings und der Menge zuzuführenden Kaugummirohmaterials). Auch kann die Steuereinheit 97 die Bewegung der beiden Werkzeugkörper 50, 52 steuern, um diese zum Beispiel so zu betreiben, wie oben bezugnehmend auf Figur 5 beschrieben.

Natürlich kann statt dem Herstellen von zweikomponentigen Kaugummis mittels zweier Spritzeinheiten 2 auch n-komponentiger Kaugummi unter Verwendung von zum Beispiel n separaten Spritzeinheiten und n separaten Kaugummirohmaterial-Reservoirs hergestellt werden.

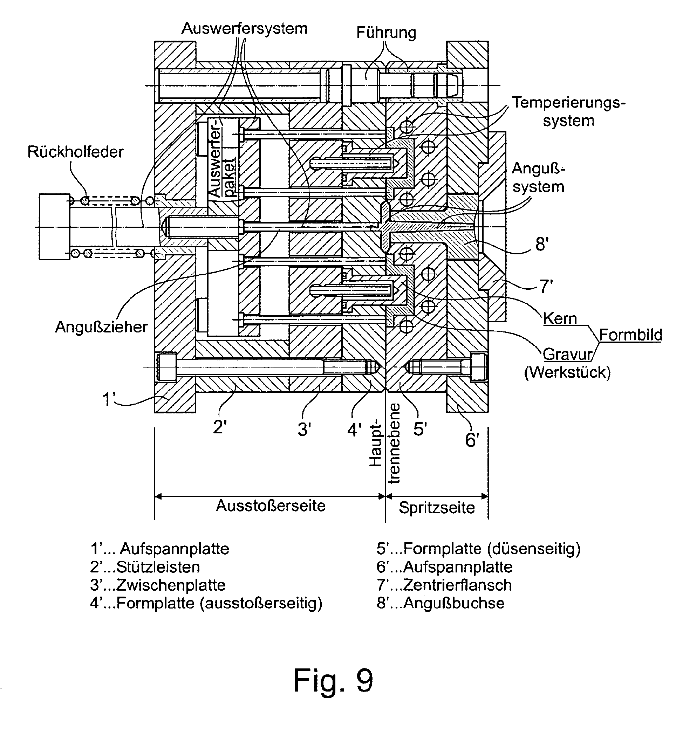

Figur 9 zeigt einen Abschnitt eines Werkzeuges, das gemäß einem exemplarischen Ausführungsbeispiel der Erfindung zur Herstellung von mehrkomponentigen Kaugummi eingesetzt werden kann und weitere Details zeigt.

Ergänzend ist darauf hinzuweisen, dass "aufweisend" keine anderen Elemente oder Schritte ausschließt und "eie" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Verwendung einer Spritzgußmaschine (1) zur Herstellung von Kaugummis als dreidimensionale Spritzgußteile, wobei einer Spritzeinheit (2) der Spritzgußmaschine (1) granulatförmige und/oder pulverförmige und/oder flüssige Kaugummi-Bestandteile oder fertige Massen zugeführt werden, die durch zumindest ein Heizelement (6) beheizt in einer Schnecke (4) der Spritzeinheit (2) und/oder mittels eines Kolbens vermischt und über eine Düse (9) bei einem Spritzvorgang an ein Spritzwerkzeug (W) abgegeben werden, um dreidimensional geformte essbare Kaugummis (10, 11, 12, G) zu spritzen, wobei das Spritzwerkzeug (W) durch zumindest ein Kühlelement (K) gekühlt wird, um gespritzte Kaugummis (10, 11, 12, G) vor dem Entformen zu kühlen, wobei in einem mehrstufigen Spritzverfahren ein aus mehreren Komponenten bestehender Kaugummi in das Spritzwerkzeug (W) gespritzt wird
wobei in dem mehrstufigen Spritzverfahren:
zunächst in einem ersten Formwerkzeug (64, 66) ein Kaugummivorformling (90) aus einer ersten Komponente gebildet wird,
nachfolgend der Kaugummivorformling (90) in ein zweites Formwerkzeug (68, 70) überführt wird, und dann
in dem zweiten Formwerkzeug (68, 70) ein Hohlraum (92, 94) des Kaugummivorformlings (90) mit der zweiten Komponente gefüllt wird und/oder der Kaugummivorformling (90) mit der zweiten Komponente umspritzt wird..

2. Verwendung einer Spritzgußmaschine (1) gemäß Anspruch 1, wobei das zumindest eine Kühlelement (K) das Spritzwerkzeug (W) auf eine Werkzeugtemperatur im Bereich von -20 bis +20 Grad Celsius, besonders vorteilhaft im Bereich von -10 bis +10 Grad Celsius, kühlt.

3. Verwendung einer Spritzgußmaschine (1) gemäß einem der vorstehenden Ansprüche, wobei die Kaugummi-Bestandteile in der Schnecke (4) und/oder an dem Kolben mit dem zumindest einen Heizelement (6) auf eine Werkstofftemperatur im Bereich von +20 bis +120 Grad Celsius, besonders vorteilhaft im Bereich von +40 bis +90 Grad Celsius, beheizt werden.

4. Verwendung einer Spritzgußmaschine (1) gemäß einem der vorstehenden Ansprüche, wobei in dem Spritzwerkzeug (W) ein Hohlkörper aus Kaugummi (14) gespritzt wird.

5. Verwendung einer Spritzgußmaschine (1) gemäß Anspruch 4, wobei mittels eines Gasinjektionsverfahrens ein ungefüllter hohler Kaugummi gespritzt wird oder mittels eines Flüssigkeitsinjektionsverfahrens ein mit einer Flüssigkeit (13) gefüllter Kaugummi (12) oder ein ungefüllter hohler Kaugummigespritzt wird.

6. Verwendung einer Spritzgußmaschine (1) gemäß einem der vorstehenden Ansprüche, wobei das Angußsystem des Spritzwerkzeugs beheizt wird.

7. Verwendung einer Spritzgußmaschine (1) gemäß einem der vorstehenden Ansprüche, wobei in dem mehrstufigen Spritzverfahren ein aus mehreren unterschiedlichen thermoplastischen Komponenten bestehender Kaugummi in dem Spritzwerkzeug (W) gespritzt wird.

8. Verwendung einer Spritzgußmaschine (1) gemäß einem der vorstehenden Ansprüche, wobei
das erste Formwerkzeug (64, 66) zwei Schalenbereiche aufweist, die miteinander ein erstes Aussparungsvolumen einschließen,
das zweite Formwerkzeug (68, 70) zwei Schalenbereiche aufweist, die miteinander ein zweites Aussparungsvolumen einschließen, das größer als das erste Aussparungsvolumen ist.

9. Verwendung einer Spritzgußmaschine (1) gemäß Anspruch 8, wobei das erste Formwerkzeug (64, 66) an mindestens einer der zwei Schalenbereiche eine Profilstruktur aufweist, die das erste Aussparungsvolumen begrenzt und zu mindestens einer Hohlstruktur (92) in einem Oberflächenbereich des Kaugummivorformlings (90) führt.

10. Verwendung einer Spritzgußmaschine (1) gemäß Anspruch 8 oder 9, wobei das erste Formwerkzeug (64, 66) einen verschiebbaren Dorn (72) aufweist, der zum Bilden einer Hohlstruktur (94) in dem Kaugummivorformling (90) in das erste Aussparungsvolumen einfahrbar und vor Entformen wieder ausfahrbar ist.

11. Verwendung einer Spritzgußmaschine (1) gemäß Anspruch 9 und 10, wobei die Profilstruktur und der verschiebbare Dorn (72) so zusammenwirken, dass die mittels der Profilstruktur gebildete Hohlstruktur (92) und die mittels des verschiebbaren Dorns (72) gebildete Hohlstruktur (94) zusammenhängend ausgebildet werden.

12. Verwendung einer Spritzgußmaschine (1) gemäß Anspruch 11, wobei bei Einbringen des Kaugummivorformlings (90) in das zweite Formwerkzeug (68, 70) die zusammenhängenden Hohlstrukturen (92, 94) mit der zweiten Komponente zumindest teilweise ausgefüllt werden und/oder wobei bei Einbringen des Kaugummivorformlings (90) in das zweite Formwerkzeug (68, 70) der Kaugummivorformling (90) mit der zweiten Komponente überspritzt wird.

13. Verwendung einer Spritzgußmaschine (1) gemäß einem der Ansprüche 9 bis 12, wobei ein Schalenbereich (64) des ersten Formwerkzeugs und ein Schalenbereich (68) des zweiten Formwerkzeugs in einem gemeinsamen ersten Werkzeugkörper (50) gebildet sind und der andere Schalenbereich (66) des ersten Formwerkzeugs und der andere Schalenbereich (70) des zweiten Formwerkzeugs in einem gemeinsamen zweiten Werkzeugkörper (52) gebildet sind.

14. Verwendung einer Spritzgußmaschine (1) gemäß einem der vorstehenden Ansprüche, wobei in dem mehrstufigen Spritzverfahren die aus dem zweiten Formwerkzeug (68, 70) erhaltene Kaugummistruktur (96) in mindestens einem dritten Formwerkzeug mit mindestens einer dritten Komponente gefüllt und/oder umspritzt wird.

15. Verwendung einer Spritzgußmaschine (1) gemäß einem der voranstehenden Ansprüche, wobei mittels des Heizelements (6) ein räumlich zunehmendes Heiztemperaturprofil in einem Raumbereich zwischen dem Zuführen (3) der Kaugummi-Bestandteile zu der Spritzgußmaschine (1) und der Düse (9) eingestellt wird, insbesondere wobei das Heiztemperaturprofil am Ort des Zuführens der Kaugummi-Bestandteile zwischen 5 Grad Celsius und 45 Grad Celsius und am Ort der Düse (9) zwischen 55 Grad Celsius und 90 Grad Celsius beträgt.

## Claims

1. Use of an injection molding machine (1) for manufacturing chewing gums as three-dimensional injection molding parts, wherein an injection unit (2) of the injection molding machine (1) is supplied with a granular and/or powdery and/or liquid chewing gum constituents or finished masses, which, while being heated by at least one heating element (6), are mixed in a screw (4) of the injection unit (2) and/or by a piston, and are dispensed by a nozzle (9) to an injection molding tool (W) during an injection process, to inject three-dimensional shaped eatable chewing gums (10, 11, 12, G), wherein the injection molding tool (W) is cooled by at least one cooling element (K) to cool the injected chewing gums before demolding, wherein in a multi-stage injection molding method a chewing gum consisting of multiple components is injected into the injection molding tool (W),
wherein in the multi-stage injection molding method:
firstly, in a first molding tool (64, 66) a chewing gum preform (90) is formed from a first component,
subsequently, the chewing gum preform (90) is transferred into a second molding tool (68, 70), and then
in the second molding tool (68, 70) a cavity (92, 94) of the chewing gum preform (90) is filled with the second component and/or the chewing gum preform (90) is overmolded by the second component.

2. Use of an injection molding machine (1) according to claim 1, wherein the at least one cooling element (K) cools the injection molding tool (W) to a tool temperature in a range from -20 to +20 degree Celsius, in particular advantageously in a range from -10 to +10 degree Celsius.

3. Use of an injection molding machine (1) according to one of the preceding claims, wherein the chewing gum constituents in the screw (4) and/or at the piston are heated by the at least one heating element (6) to a material temperature in a range from +20 to +120 degree Celsius, in particular advantageously in a range from +40 to +90 degree Celsius.

4. Use of an injection molding machine (1) according to one of the preceding claims, wherein a hollow body of chewing gum is injected inside the injection molding tool (W).

5. Use of an injection molding machine (1) according to claim 4, wherein an unfilled hollow chewing gum is injected by a gas injection molding method or a chewing gum (12) filled with a liquid (13) or an unfilled hollow chewing gum is injected by a liquid injection molding method.

6. Use of an injection molding machine (1) according to one of the preceding claims, wherein the gating system of the injection molding tool is heated.

7. Use of an injection molding machine (1) according to one of the preceding claims, wherein in the multi-stage injection molding method a chewing gum consisting of multiple different thermoplastic components is injected inside the injection molding tool (W).

8. Use of an injection molding machine (1) according to one of the preceding claims, wherein
the first molding tool (64, 66) comprises two frame regions which together enclose a first recess volume,
the second molding tool (68, 70) comprises two frame regions which together enclose a second recess volume which is larger than the first recess volume.

9. Use of an injection molding machine (1) according to claim 8, wherein the first molding tool (64, 66) comprises a profile structure at at least one of the two frame regions, which delimits the first recess volume and leads to at least one hollow structure (92) in a surface region of the chewing gum preform (90).

10. Use of an injection molding machine (1) according to claim 8 or 9, wherein the first molding tool (64, 66) comprises a slidable mandrel (72) which is retractable into the first recess volume for forming a hollow structure (94) in the chewing gum preform (90) and is extendible back before demolding.

11. Use of an injection molding machine (1) according to claim 9 or 10, wherein the profile structure and the slidable mandrel (72) act together such that the hollow structure (92) formed by the profile structure and the hollow structure (94) formed by the slidable mandrel (72) are formed coherent.

12. Use of an injection molding machine (1) according to claim 11, wherein during inserting the chewing gum preform (90) into the second molding tool (68, 70) the coherent hollow structures (92, 94) are filled at least partially with the second component and/or wherein during inserting the chewing gum preform (90) into the second molding tool (68, 70) the chewing gum preform (90) is overmolded by the second component.

13. Use of an injection molding machine (1) according to one of the claims 9 to 12, wherein a frame region (64) of the first molding tool and a frame region (68) of the second molding tool are formed in a common first tool body (50), and the other frame region (66) of the first molding tool and the other frame region (70) of the second molding tool are formed in a common second tool body (52).

14. Use of an injection molding machine (1) according to one of the preceding claims, wherein in the multi-stage injection molding method the chewing gum structure (96) resulting from the second molding tool (68, 70) is filled with and/or overmolded by at least one third component in at least one third molding tool.

15. Use of an injection molding machine (1) according to one of the preceding claims, wherein a spatially increasing heating temperature profile is adjusted in a space region between the supplying (3) of the chewing gum constituents to the injection molding machine (1) and the nozzle (9) by the heating element (6), in particular wherein the heating temperature profile at the location of supplying of the chewing gum constituents is between 5 degree Celsius and 45 degree Celsius and at the location of the nozzle (9) is between 55 degree Celsius and 90 degree Celsius.

## Revendications

1. Utilisation d'une machine de moulage par injection (1) pour la fabrication de chewing-gums sous forme de pièces moulées par injection en trois dimensions, des éléments de chewing-gum granulés et/ou poudreux et/ou liquides ou des masses terminées étant amenées à une unité d'injection (2) de la machine de moulage par injection (1), lesquelles sont chauffées par au moins un élément chauffant (6) dans une vis sans fin (4) de l'unité d'injection (2) et/ou mélangées à l'aide d'un piston et dégagées par une buse (9) pour un procédé d'injection sur un outil d'injection (W) afin d'injecter des chewing-gums (10, 11, 12, G) comestibles formés en trois dimensions, l'outil d'injection (W) étant refroidi par au moins un élément de refroidissement (K) afin de refroidir des chewing-gums (10, 11, 12, G) injectés avant le démoulage, un chewing-gum constitué de plusieurs composants étant injecté dans un procédé d'injection à plusieurs étapes dans l'outil d'injection (W)
dans le procédé d'injection à plusieurs étapes :
tout d'abord dans un premier outil de moulage (64, 66), une ébauche de chewing-gum (90) étant formée à partir d'un premier composant,
puis l'ébauche de chewing-gum (90) étant transférée dans un deuxième outil de moule (68, 70) et
dans le deuxième outil de moule (68, 70), une cavité (92, 94) de l'ébauche de chewing-gum (90) étant remplie avec le deuxième composant et/ou l'ébauche de chewing-gum (90) étant enrobée avec le deuxième composant.

2. Utilisation d'une machine de moulage par injection (1) selon la revendication 1, l'au moins un élément de refroidissement (K) refroidissant l'outil d'injection (W) à une température d'outil dans la plage de -20 à +20 degrés Celsius, de manière particulièrement avantageuse dans la plage de -10 à +10 degrés Celsius.

3. Utilisation d'une machine de moulage par injection (1) selon l'une quelconque des revendications précédentes, les éléments de chewing-gum étant chauffés dans la vis sans fin (4) et/ou sur le piston avec l'au moins un élément chauffant (6) à une température de matériau dans la plage de +20 à +120 degrés Celsius, de manière particulièrement avantageuse dans la plage de +40 à +90 degrés Celsius.

4. Utilisation d'une machine de moulage par injection (1) selon l'une quelconque des revendications précédentes, un corps creux en chewing-gum (14) étant injecté dans l'outil d'injection (W).

5. Utilisation d'une machine de moulage par injection (1) selon la revendication 4, un chewing-gum creux non rempli étant injecté à l'aide d'un procédé d'injection de gaz ou un chewing-gum (12) rempli d'un liquide (13) ou un chewing-gum creux non rempli étant injecté à l'aide d'un procédé d'injection de liquide.

6. Utilisation d'une machine de moulage par injection (1) selon l'une quelconque des revendications précédentes, le système d'injection de l'outil d'injection étant chauffé.

7. Utilisation d'une machine de moulage par injection (1) selon l'une quelconque des revendications précédentes, un chewing-gum constitué de plusieurs composants thermoplastiques différents étant injecté dans l'outil d'injection (W) dans le procédé d'injection à plusieurs étapes.

8. Utilisation d'une machine de moulage par injection (1) selon l'une quelconque des revendications précédentes,
le premier outil de moulage (64, 66) présentant deux zones de coque qui forment entre elles un premier volume d'évidement,
le deuxième outil de moulage (68, 70) présentant deux zones de coque qui forment entre elles un deuxième volume d'évidement qui est plus grand que le premier volume d'évidement.

9. Utilisation d'une machine de moulage par injection (1) selon la revendication 8, le premier outil de moulage (64, 66) présentant sur au moins l'une des deux zones de coque une structure profilée qui délimite le premier volume d'évidement et mène à au moins une structure creuse (92) dans une zone de surface de l'ébauche de chewing-gum (90).

10. Utilisation d'une machine de moulage par injection (1) selon la revendication 8 ou 9, le premier outil de moulage (64, 66) présentant une épine mobile (72) qui peut être rentrée pour la formation d'une structure creuse (94) dans l'ébauche de chewing-gum (90) dans le premier volume d'évidement et peut être sortie de nouveau avant le démoulage.

11. Utilisation d'une machine de moulage par injection (1) selon les revendications 9 et 10, la structure profilée et l'épine mobile (72) coagissant de sorte que la structure creuse (92) formée à l'aide de la structure profilée et la structure creuse (94) formée à l'aide de l'épine mobile (72) soient réalisées de manière continue.

12. Utilisation d'une machine de moulage par injection (1) selon la revendication 11, lors de l'introduction de l'ébauche de chewing-gum (90) dans le deuxième outil de moule (68, 70), les structures creuses (92, 94) continues étant remplies au moins en partie avec le deuxième composant et/ou lors de l'introduction de l'ébauche de chewing-gum (90) dans le deuxième outil de moulage (68,70), l'ébauche de chewing-gum (90) étant surinjectée avec le deuxième composant.

13. Utilisation d'une machine de moulage par injection (1) selon l'une quelconque des revendications 9 à 12, une zone de coque (64) du premier outil de moulage et une zone de coque (68) du deuxième outil de moulage étant formées dans un premier corps d'outil commun (50) et l'autre zone de coque (66) du premier outil de moulage et l'autre zone de coque (70) du deuxième outil de moulage étant formées dans un deuxième corps d'outil commun (52).

14. Utilisation d'une machine de moulage par injection (1) selon l'une quelconque des revendications précédentes, dans le procédé d'injection à plusieurs étapes, la structure de chewing-gum (96) obtenue à partir du deuxième outil de moulage (68, 70) étant remplie et/ou enrobée dans au moins un troisième outil de moulage avec au moins un troisième composant.

15. Utilisation d'une machine de moulage par injection (1) selon l'une quelconque des revendications précédentes, à l'aide de l'élément chauffant (6), un profil de température de chauffage croissant dans l'espace étant réglé dans une zone spatiale entre l'amenée (3) des éléments de chewing-gum à la machine de moulage par injection (1) et la buse (9), en particulier le profil de température de chauffage étant compris à l'endroit de l'amenée des éléments de chewing-gum entre 5 degrés Celsius et 45 degrés Celsius et à l'endroit de la buse (9) entre 55 degrés Celsius et 90 degrés Celsius.
